# FASCICULE DE BREVET EUROPEEN

(11) **EP 0 937 597 B1**
(45) Date de publication et mention de la délivrance du brevet: **12.05.2004**
(21) Numéro de dépôt: 99400430.7
(22) Date de dépôt: 23.02.1999
(51) Int. Cl.: B60J 1/14

(54) **Disposiif pour l'articulation d'une vitre de custode de véhicule automobile**
Vorrichtung für das Gelenk eines Fahrzeugfensters
Device for the articulation of a vehicle window

(30) Priorité: 23.02.1998 FR 9802125
(43) Date de publication de la demande: 25.08.1999
(73) Titulaire: Cooper-Standard Automotive France S.A., 95871 Bezons (FR)
(72) Inventeur: Hautbois, Yvon, 35500 Vitre (FR); Lagrue, Hervé, 35500 Vitre (FR); Adorni, Serge, 35500 Vitre (FR)
(74) Mandataire: Busnel, Jean-Benoît

(56) Documents cités:
- EP-A- 0 511 884
- EP-A- 0 646 483
- FR-A- 2 204 513
- FR-A- 2 737 245
- GB-A- 1 215 267
- US-A- 3 633 316

## Description

La présente invention concerne un dispositif pour l'articulation d'un panneau mobile sur une carrosserie de véhicule automobile.

Il existe déjà des dispositifs d'articulation tels que des charnières fixées respectivement sur la vitre et sur la carrosserie par collage et/ou vissage.

Cependant ces dispositifs impliquent des opérations de montage laborieuses complexes et délicates.

En effet, le vissage de la charnière sur la carrosserie nécessite des outils spécifiques (visseuses, ...) dont la manoeuvre est souvent malaisée du fait de l'accès difficile aux zones de fixation. En outre, la peinture de la carrosserie est susceptible d'être endommagée ou dégradée localement par contact de serrage avec les éléments métalliques participant à la fixation de la charnière, ce qui peut entraîner des problèmes de corrosion.

Par ailleurs, lorsque les éléments de fixation comprennent des écrous, il est préconisé de procéder à leur habillage du côté intérieur de la carrosserie, ce qui augmente les coûts de production.

Parallèlement le collage est un mode de fixation définitif qui n'offre aucune possibilité de réglage ultérieur de la position ou de l'orientation du dispositif d'articulation sur la carrosserie.

Au surplus, la maintenance et notamment le remplacement de la vitre et/ou de la charnière s'accompagnent nécessairement d'une dégradation de la peinture dans les zones de fixation au détriment tant de la protection de la tôle que de l'aspect esthétique.

GB-A 1 215 367 montre une vitre de custode montée au moyen de charnières en acier inoxydable sur un châssis de véhicule de manière à pouvoir pivoter autour d'un axe parallèle au bord de vitre de custode voisin de la porte. Ces charnières comportent des paumelles de section en L, l'une desdites paumelles adhérant à la vitre et l'autre paumelle étant fixée sur le châssis du véhicule par des chevilles 10. Les dessins montrent également des bandes de caoutchouc 12, 13 formant joints d'étanchéité le long de ce bord de vitre, mais ces joints ne participent pas à la liaison entre la vitre et le châssis. La présente invention a pour but de résoudre les problèmes techniques liés à l'art antérieur de façon satisfaisante.

Ce but est atteint, selon l'invention, au moyen d'un dispositif pour l'articulation d'un panneau mobile sur une carrosserie de véhicule automobile, caractérisé en ce qu'il comprend, d'une part, au moins un élément de fixation porté par une platine et destiné à assurer un verrouillage éventuellement amovible par coopération avec au moins un élément d'ancrage solidaire de la carrosserie et, d'autre part, un élément de liaison élastiquement déformable surmoulé sur le bord de ladite vitre et dans lequel est scellée une partie d'extrémité de ladite platine.

Selon une caractéristique avantageuse, ledit élément de fixation et ledit élément d'ancrage sont constitués indifféremment d'une dent pourvue d'organes d'accrochage ou d'une cavité complémentaire destinée à recevoir ladite dent et qui est pourvue d'organes de retenue desdits organes d'accrochage.

Selon un mode de réalisation particulier, ladite cavité est réalisée sur l'élément d'ancrage et ladite dent est réalisée sur l'élément de fixation.

Selon une variante, ladite dent comporte une languette centrale assurant le blocage anti-rotation de l'élément de fixation dans l'élément d'ancrage.

Selon une autre variante, lesdits organes d'accrochage sont constitués de deux crochets latéraux et lesdits organes de retenue sont formés de crans ménagés sur les rebords latéraux de ladite cavité.

De préférence, les crans sont munis de faces inclinées vers l'intérieur assurant le guidage et la déformation desdits crochets.

Selon une autre caractéristique, ledit élément d'ancrage comporte au moins deux chevilles destinées à être insérées dans des alésages ménagés au travers de la carrosserie et à recevoir des pions assurant leur déformation forcée et leur coincement dans lesdits alésages.

Selon une variante, la paroi latérale interne desdites chevilles porte une nervure annulaire délimitant un rétreint.

Selon encore une autre caractéristique, lesdits pions possèdent une tête élargie ou tronconique formant butée.

Selon d'autres caractéristiques, ladite platine comporte des orifices traversants pour renforcer le scellage dans l'élément de liaison.

Par ailleurs, ladite platine est sensiblement perpendiculaire à l'élément de fixation et parallèle à la face interne de la vitre.

Selon un mode de réalisation spécifique, le dispositif comprend deux éléments de fixation destinés à coopérer avec deux éléments d'ancrage.

Selon une première variante, ledit élément de liaison est surmoulé sur la face intérieure du panneau et éventuellement sur le chant dudit panneau.

Selon une autre variante, ledit élément de liaison est surmoulé sur les faces intérieure et extérieure dudit panneau.

Un autre objet de l'invention est une utilisation de ce dispositif pour le montage d'une vitre de custode ou d'un toit ouvrant.

Le dispositif d'articulation selon l'invention permet de simplifier les opérations de montage d'un panneau mobile sur la carrosserie.

En outre, le positionnement du dispositif peut être ajusté de façon précise, ce qui contribue à assurer à la fois une bonne étanchéité de l'assemblage, une finition soignée et d'obtenir de façon simple un affleurement du panneau sur la carrosserie. Le montage du dispositif de l'invention est réversible, ce qui facilite les opérations de maintenance et les réparations.

Enfin, l'intégrité de la carrosserie est préservée, ce qui renforce sa protection contre les phénomènes de corrosion en supprimant tout contact avec des pièces métalliques.

Le dispositif de l'invention trouvera une application particulièrement avantageuse pour l'articulation d'une vitre de custode ou d'un toit ouvrant.

L'invention sera mieux comprise à la lecture de la description qui va suivre accompagnée des dessins sur lesquels :

La figure 1 représente une vue latérale extérieure d'une vitre de custode montée sur la carrosserie d'un véhicule au moyen du dispositif d'articulation de l'invention.

les figures 2a et 2b représentent des vues en coupe respectivement selon AA et BB partielle d'un mode de réalisation du dispositif d'articulation de l'invention.

Les figures 3a, 3b et 3c représentent des vues respectivement de dessous, de face et de côté de l'élément de fixation du dispositif de l'invention.

Les figures 4a, 4b et 4c représentent des vues respectivement en coupe selon CC, de dessus et de côté de l'élément d'ancrage du dispositif de l'invention.

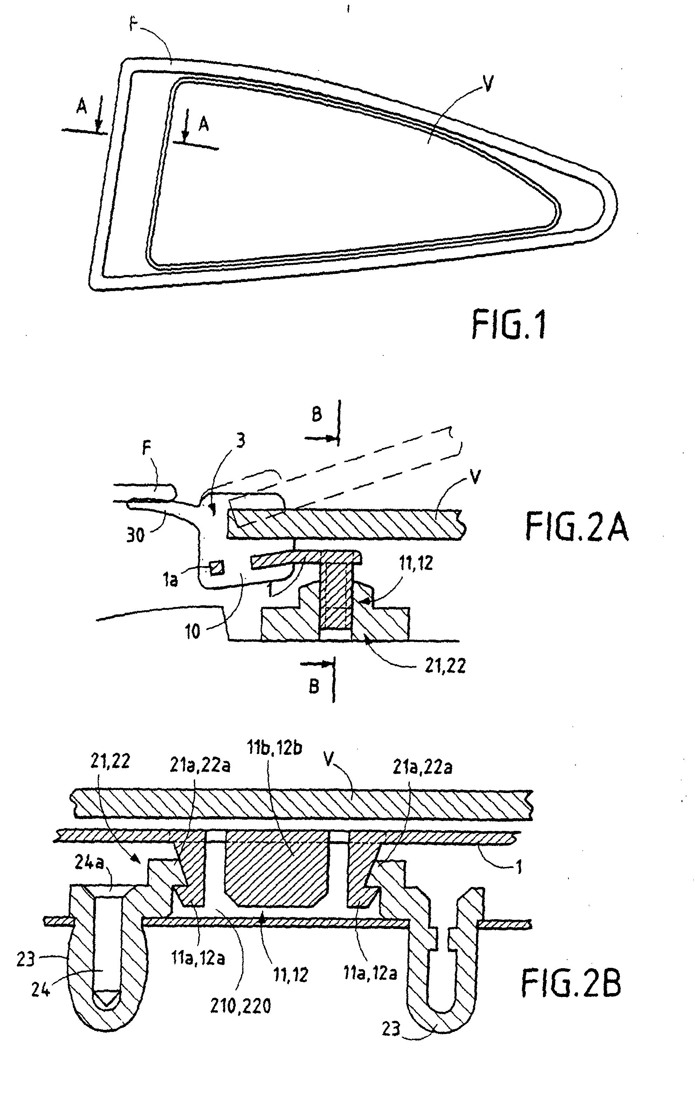

La figure 1 représente un panneau mobile formé d'une vitre de custode arrière V montée sur la carrosserie d'un véhicule automobile au moyen du dispositif d'articulation de l'invention. Ce dispositif assure en outre un affleurement extérieur de la vitre V avec la feuillure F de carrosserie.

Comme représenté en coupe sur les figure 2a et 2b, le dispositif comprend, d'une part, au moins un et ici deux éléments de fixation 11, 12 portés par une platine 1 et destinés à assurer un verrouillage éventuellement amovible, par coopération avec ici deux éléments d'ancrage 21, 22 correspondants, solidaires de la carrosserie.

Le dispositif d'articulation comprend, d'autre part, un élément de liaison 3, élastiquement déformable, qui est surmoulé sur le bord de la vitre V et dans lequel est scellée une partie d'extrémité la de la platine 1. La platine 1 comporte, le cas échéant, des orifices traversants 10 pour renforcer le scellage dans la matière élastomère ou plastomère constitutive de l'élément de liaison 3. Dans le mode de réalisation représenté sur la figure 2a, l'élément de liaison 3 est surmoulé à la fois sur les faces intérieure et extérieure de la vitre V.

Dans une variante non représentée, l'élément de liaison n'est surmoulé que sur la face intérieure de la vitre V et éventuellement sur le chant de ladite vitre.

L'élément de liaison 3 est, le cas échéant pourvu d'une lèvre souple d'étanchéité 30 venant en contact d'appui, intérieurement contre la feuillure F. La platine 1 s'étend de façon sensiblement perpendiculaire par rapport aux éléments de fixation 11,12 et parallèlement à la face interne de la vitre V.

De préférence, la platine 1 possède un léger cintrage longitudinal favorisant le pivotement de la vitre V.

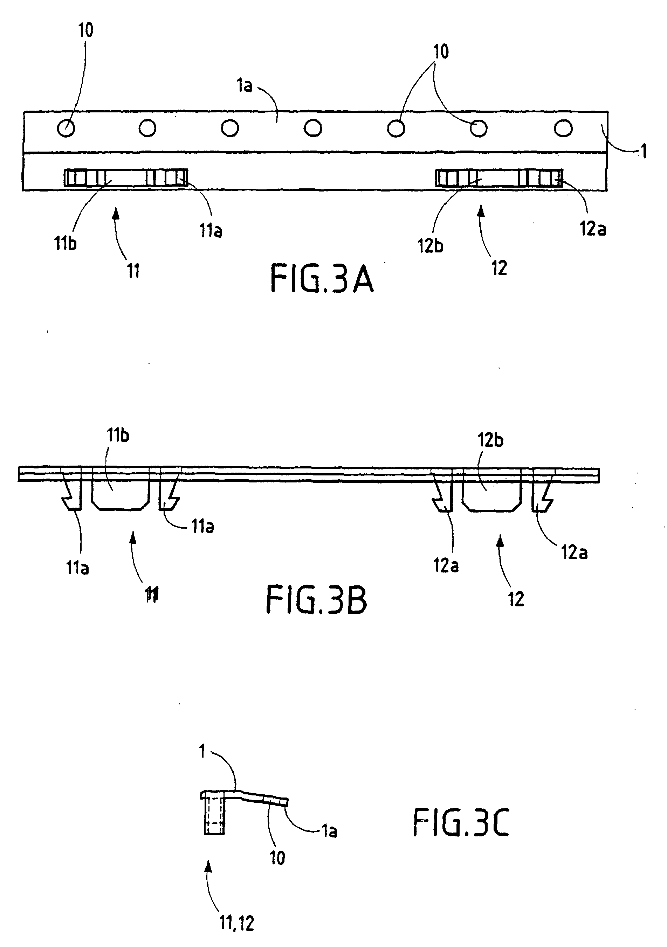

Chaque élément de fixation 11, 12 est constitué ici d'une dent tandis que chaque élément d'ancrage comprend une cavité complémentaire 210, 220 destinée à recevoir l'une desdites dents, comme représenté sur les figures 2b, 3a, 3b et 4a. Chaque dent est pourvue de deux organes d'accrochage sous forme de crochets latéraux 11a, 12a qui coopèrent par déformation et/ou par pivotement élastique, vers l'intérieur de la cavité avec des organes de retenue réalisés sous forme de crans 21a, 22a ménagés sur les bords latéraux de la cavité 210, 220.

Chacune des dents comprend également une languette centrale 11b, 12b assurant le blocage anti-rotation de ladite dent dans ladite cavité 210, 220. La languette 11b, 12b est séparée des crochets latéraux 11a, 12a de façon à permettre leur libre pivotement vers l'intérieur.

Dans une autre variante, non représentée, la cavité est réalisée sur l'élément de fixation tandis que la dent est portée par l'élément d'ancrage.

Les crans 21a, 22a sont munis de faces inclinées vers l'intérieur de la cavité 210, 220 en vue d'assurer le guidage des crochets 11a, 12a et de faciliter leur déformation et/ou leur pivotement.

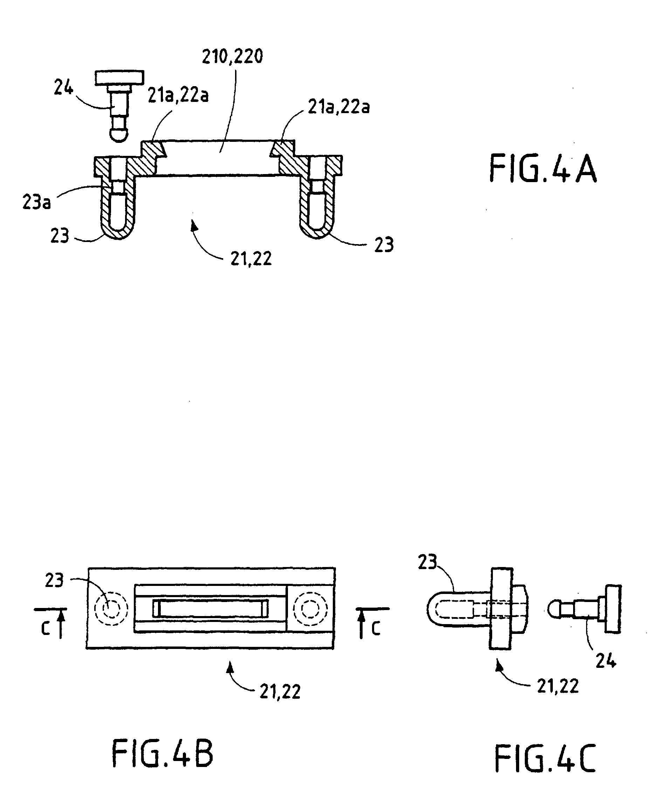

Un élément d'ancrage 21, 22, tel que représenté sur les figures 2b, 4a, 4b et 4c, comporte au moins deux chevilles 23 destinées à être insérées dans des alésages ou des perçages ménagés au travers de la carrosserie. Les chevilles 23 reçoivent des pions 24 assurant leur déformation forcée et leur coincement dans les alésages, comme représenté sur la partie gauche de la figure 2b, en vue de rendre les éléments d'ancrage solidaires de la carrosserie.

La paroi latérale interne des chevilles 23 porte une nervure annulaire 23a délimitant un rétreint.

L'introduction du pion 24 à l'intérieur de la cheville 23 provoque une expansion de la cheville derrière la tôle de carrosserie ou à l'intérieur de l'alésage, ce qui a pour effet de rendre ladite cheville solidaire de la carrosserie et par-là même d'interdire tout déplacement de l'élément d'ancrage 21, 22.

Les pions 24 possèdent de préférence une tête élargie ou tronconique 24a formant butée à l'extérieur de la cheville 23 de façon à limiter leur enfoncement et à permettre aussi leur extraction. Dans un mode de réalisation particulier, les pions 24 seront formés de vis.

## Revendications

1. Dispositif pour l'articulation d'un panneau mobile (V) sur une carrosserie de véhicule automobile, **caractérisé en ce qu'**il comprend, d'une part, au moins un élément de fixation (11, 12) porté par une platine (1) et destiné à assurer un verrouillage éventuellement amovible par coopération avec au moins un élément d'ancrage (21, 22) solidaire de la carrosserie et, d'autre part, un élément de liaison (3) élastiquement déformable surmoulé sur le bord dudit panneau (V) et dans lequel est scellée une partie d'extrémité (1a) de ladite platine (1).

2. Dispositif selon la revendication 1, **caractérisé en ce que** ledit élément de fixation (11, 12) et ledit élément d'ancrage (21, 22) sont constitués indifféremment d'une dent pourvue d'organes d'accrochage (11a, 12a) ou d'une cavité (210, 220) complémentaire destinée à recevoir ladite dent et qui est pourvue d'organes de retenue (21a, 22a) desdits organes d'accrochage (11a, 12a).

3. Dispositif selon la revendication 2, **caractérisé en ce que** ladite cavité (210, 220) est réalisée sur l'élément d'ancrage (21, 22) et ladite dent est réalisée sur l'élément de fixation (11, 12).

4. Dispositif selon la revendication 2 ou 3, **caractérisé en ce que** ladite dent comporte une languette centrale (11b, 12b) assurant le blocage anti-rotation de l'élément de fixation (11, 12) dans l'élément d'ancrage (21, 22).

5. Dispositif selon l'une des revendications 2 à 4, **caractérisé en ce que** lesdits organes d'accrochage (11a, 12a) sont constitués de deux crochets latéraux et lesdits organes de retenue (21a, 22a) sont formés de crans ménagés sur les rebords latéraux de ladite cavité (210,220).

6. Dispositif selon la revendication 5, **caractérisé en ce que** les crans sont munis de faces inclinées vers l'intérieur assurant le guidage et la déformation desdits crochets.

7. Dispositif selon l'une des revendications précédentes, **caractérisé en ce que** ledit élément d'ancrage (21, 22) comporte au moins deux chevilles (23) destinées à être insérées dans des alésages ménagés au travers de la carrosserie et à recevoir des pions (24) assurant leur déformation forcée et leur coincement dans lesdits alésages.

8. Dispositif selon la revendication 7, **caractérisé en ce que** la paroi latérale interne desdites chevilles (23) porte une nervure annulaire (23a) délimitant un rétreint.

9. Dispositif selon la revendication 7 ou 8, **caractérisé en ce que** lesdits pions (24) possèdent une tête élargie ou tronconique (24a) formant butée.

10. Dispositif selon l'une des revendications précédentes, **caractérisé en ce que** ladite platine (1) comporte des orifices traversants (10) pour renforcer le scellage dans l'élément de liaison (3).

11. Dispositif selon l'une des revendications précédentes, **caractérisé en ce que** ladite platine (1) est sensiblement perpendiculaire à l'élément de fixation (11, 12) et parallèle à la face interne du panneau (V).

12. Dispositif selon l'une des revendications précédentes, **caractérisé en ce qu'**il comprend deux éléments de fixation (11, 12) destinés à coopérer avec deux éléments d'ancrage (21, 22).

13. Dispositif selon l'une des revendications précédentes **caractérisé en ce que** ledit élément de liaison (3) est surmoulé sur la face intérieure du panneau (V) et éventuellement sur le chant dudit panneau.

14. Dispositif selon l'une des revendications 1 à 12, **caractérisé en ce que** ledit élément de liaison (3) est surmoulé sur les faces intérieure et extérieure dudit panneau (V).

15. Utilisation du dispositif selon l'une des revendications précédentes pour le montage d'une vitre de custode ou d'un toit ouvrant.

## Claims

1. Device for the articulation of a mobile panel (V) on a motor vehicle body, **characterised in that** it comprises, on the one hand, at least one fixing element (11, 12) carried by a plate (1) and intended to ensure locking, removable if appropriate, by co-operation with at least one anchoring element (21, 22) integral with the body and, on the other hand, an elastically deformable linking element (3) moulded onto the edge of said panel (V) and into which an end part (1a) of said plate (1) is sealed.

2. Device according to Claim 1, **characterised in that** said fixing element (11, 12) and said anchoring element (21, 22) are constituted either by a tooth provided with fastening members (11a, 12a) or by a complementary cavity (210, 220) intended to accommodate said tooth and provided with members (21a, 22a) for holding said fastening members (11a, 12a).

3. Device according to Claim 2, **characterised in that** said cavity (210, 220) is produced on the anchoring element (21, 22) and said tooth is produced on the fixing element (11, 12).

4. Device according to Claim 2 or 3, **characterised in that** said tooth comprises a central tab (11b, 12b) ensuring the anti-rotation locking of the fixing element (11, 12) into the anchoring element (21, 22).

5. Device according to one of Claims 2 to 4, **characterised in that** said fastening members (11a, 12a) are constituted by two side hooks and said holding members (21a, 22a) are formed of notches made on the side flanges of said cavity (210, 220).

6. Device according to Claim 5, **characterised in that** the notches are provided with faces sloping inwards, ensuring the guiding and deformation of said hooks.

7. Device according to one of the preceding claims, **characterised in that** said anchoring element (21, 22) comprises at least two dowels (23) intended to be inserted into the bore holes made through the body and to receive pins (24) ensuring their forced deformation and wedging into said bore holes.

8. Device according to Claim 7, **characterised in that** the inner side wall of said dowels (23) carries an annular vein (23a) delimiting a necking.

9. Device according to Claim 7 or 8, **characterised in that** said pins (24) have a widened or tapered head (24a) forming a stop.

10. Device according to one of the preceding claims, **characterised in that** said plate (1) comprises through-holes (10) to reinforce the seal in the linking element (3).

11. Device according to one of the preceding claims, **characterised in that** said plate (1) is substantially perpendicular to the fixing element (11, 12) and parallel to the inner face of the panel (V).

12. Device according to one of the preceding claims, **characterised in that** it comprises two fixing elements (11, 12) intended to cooperate with two anchoring elements (21, 22).

13. Device according to one of the preceding claims **characterised in that** said linking element (3) is moulded onto the inner face of the panel (V) and if appropriate onto the edge of said panel.

14. Device according to one of Claims 1 to 12, **characterised in that** said linking element (3) is moulded onto the inner and outer faces of said panel (V).

15. Use of the device according to one of the preceding claims for mounting a rear quarter light or a sunroof.

## Patentansprüche

1. Vorrichtung zum Anlenken einer beweglichen Platte (V) an einer Kraftfahrzeugkarosserie, **dadurch gekennzeichnet, dass** sie einerseits wenigstens ein Befestigungselement (11, 12), das von einer Platine (1) getragen und dazu bestimmt ist, eine gegebenenfalls lösbare Verriegelung durch Zusammenwirken mit wenigstens einem mit der Karosserie verbundenen Verankerungselement (21, 22) zu gewährleisten, und andererseits ein elastisch verformbares Verbindungselement (3) aufweist, das an dem Rand der Platte (V) angeformt ist und in dem ein Endteil (1a) der Platine (1) eingesiegelt ist.

2. Vorrichtung nach Anspruch 1, **dadurch gekennzeichnet, dass** das Befestigungselement (11, 12) und das Verankerungselement (21, 22) in gleicher Weise von einem mit Verhakungselementen (11a, 12a) versehenen Zahn oder von einer komplementären Vertiefung (210, 220) gebildet sind, die zur Aufnahme des Zahnes bestimmt und mit Elementen zum Halten (21a, 22a) der Verhakungselemente (11a, 12a) versehen ist.

3. Vorrichtung nach Anspruch 2, **dadurch gekennzeichnet, dass** die Vertiefung (210, 220) an dem Verankerungselement (21, 22) realisiert und der Zahn an dem Befestigungselement (11, 12) realisiert ist.

4. Vorrichtung nach Anspruch 2 oder 3, **dadurch gekennzeichnet, dass** der Zahn eine zentrale Zunge (11b, 12b) aufweist, die die Anti-Dreh-Blockade des Befestigungselements (11, 12) in dem Verankerungselement (21, 22) gewährleistet.

5. Vorrichtung nach einem der Ansprüche 2 bis 4, **dadurch gekennzeichnet, dass** die Verankerungselemente (11a, 12a) aus zwei seitlichen Klammern und die Halteelemente (21a, 22a) aus an den seitlichen Rändern der Vertiefung (210, 220) angebrachten Einkerbungen gebildet sind.

6. Vorrichtung nach Anspruch 5, **dadurch gekennzeichnet, dass** die Einkerbungen mit nach innen geneigten Seiten ausgestattet sind, die die Führung und Verformung der Klammern gewährleisten.

7. Vorrichtung nach einem der vorhergehenden Ansprüche, **dadurch gekennzeichnet, dass** das Verankerungselement (21, 22) wenigstens zwei Bolzen (23) aufweist, die dazu bestimmt sind, in Bohrungen eingefügt zu werden, die durch die Karosserie hindurch gehend angebracht sind, und Stöpsel (24) aufzunehmen, die ihre erzwungene Verformung und ihr Verkeilen in den Bohrungen gewährleisten.

8. Vorrichtung nach Anspruch 7, **dadurch gekennzeichnet, dass** die innere Seitenwand der Bolzen (23) eine eine Einschnürung begrenzende, ringförmige Rippe (23a) trägt.

9. Vorrichtung nach Anspruch 7 oder 8, **dadurch gekennzeichnet, dass** die Stöpsel (24) einen erweiterten oder kegelstumpfartigen (24a), einen Anschlag bildenden Kopf besitzen.

10. Vorrichtung nach einem der vorhergehenden Ansprüche, **dadurch gekennzeichnet, dass** die Platine (1) durchgehende Öffnungen (10) aufweist, um die Einsiegelung in dem Verbindungselement (3) zu verstärken.

11. Vorrichtung nach einem der vorhergehenden Ansprüche, **dadurch gekennzeichnet, dass** die Platine (1) im wesentlichen senkrecht zu dem Befestigungselement (11, 12) und parallel zur Innenseite der Platte (V) verläuft.

12. Vorrichtung nach einem der vorhergehenden Ansprüche, **dadurch gekennzeichnet, dass** sie zwei Befestigungselemente (11, 12) aufweist, die zum Zusammenwirken mit zwei Verankerungselementen (21, 22) bestimmt sind.

13. Vorrichtung nach einem der vorhergehenden Ansprüche, **dadurch gekennzeichnet, dass** das Verbindungselement (3) auf der Innenseite der Platte (V) und gegebenenfalls auf der Kante der Platte angeformt ist.

14. Vorrichtung nach einem der Ansprüche 1 bis 12, **dadurch gekennzeichnet, dass** das Verbindungselement (3) auf der Innen- und Außenseite der Platte (V) angeformt ist.

15. Verwendung der Vorrichtung nach einem der vorhergehenden Ansprüche für die Montage eines Seitenfensters oder eines zu öffnenden Daches.
